# EUROPEAN PATENT SPECIFICATION

(11) **EP 2 015 480 B1**
(45) Date of publication and mention of the grant of the patent: **10.11.2010**
(21) Application number: 07290878.3
(22) Date of filing: 11.07.2007
(51) Int. Cl.: H04B 10/08

(54) **Optical signature device and method of operating an optical signature device**
Optische Unterschriftenvorrichtung und Betriebsverfahren für eine optische Unterschriftenvorrichtung
Dispositif de signature optique et procédé d'un dispositif de signature optique

(43) Date of publication of application: 14.01.2009
(73) Proprietor: Alcatel Lucent, 75008 Paris (FR)
(72) Inventor: Pfeiffer, Thomas, 70569 Stuttgart (DE)
(74) Representative: Schmidt, Werner Karl

(56) References cited:
- EP-A- 1 098 458
- EP-A- 1 748 580
- WO-A-96/31022
- US-B1- 6 269 204
- US-B1- 6 396 575

## Description

The present invention relates to an optical signature device for providing an optically detectable signature to an optical system, particularly to an optical communications network, wherein said optical signature device comprises an optical path that can be coupled with the optical system.

The present invention also relates to a method of operating an optical signature device for providing an optically detectable signature to an optical system.

The present invention further relates to an optical network element comprising an optical signature device.

Optical signature devices are per se known and are used to generate e.g. specific reflection patterns upon receiving incident optical power. The specific reflection patterns enable a unique identification of a particular signature device.

Optical signature devices can hence be employed to test the integrity of optical links such as of passive optical links that are e.g. provided within passive optical networks (PON) or other types of optical access networks.

A network operator providing a PON may e.g. transmit a test signal from a central office to one or more optical links to be tested, wherein each of said links comprises a specific optical signature device. The signature devices are preferably arranged in proximity to optical link termination equipment such as an optical network unit (ONU) located at the customer's premises. In this case, the test signal is reflected within the signature devices of the tested links, and corresponding reflected signals may be received and evaluated at the central office. Since each of the links involved in the test comprises a specific optical signature device, the reflected signals may - upon receiving at the central office - be assigned to a specific link or customer corresponding to that link. Thus, even in optical networks having tree topology, optical link continuity may be tested on a per-customer-basis.

EP 1 748 580 A1 discloses an optical signature device applying a typical signature to a portion of incident light and reflecting the so modified portion of the incident light. The known system uses a Mach-Zehnder-device arranged in a reflector configuration to provide a specific optical signature.

US 6,269,204 also disclose an optical signature device applying a typical signature to a portion of incident light and reflecting the so modified portion of the incident light, the signature being defined dynamically.

In order to distinguish between different optical links, such as between different drop fibers within a PON, it is necessary to provide for unique and unambiguous optical reflections at the end of each drop fiber. This can be achieved by providing a plurality of differently configured signature devices each of which is assigned to one drop fiber. However, providing such a plurality of different signature devices, e.g. Mach-Zehnder-devices as proposed within EP 1 748 580 A1, each of which provides for a unique reflection pattern, is rather disadvantageous because the network operator has to maintain a comparatively large inventory of delicate optical devices. Apart from the maintenance work necessitated by the large inventory, dealing with a plurality of different signature devices may cause errors when handling the devices, for instance during installation procedures and the like.

Therefore, it is an object of the present invention to provide an optical signature device which enables providing a wide variety of unique reflection patterns or other mechanisms for realizing optically detectable signatures e.g. within optical network termination equipment on the subscriber side of a passive optical network while at the same time ensuring a flexible and simple handling to reduce service costs and efforts.

According to the present invention, regarding the above mentioned optical signature device, this object is achieved by providing configuration means for selecting a predetermined signature which is to be provided by the optical signature device, and by signature generating means for generating said predetermined signature within said optical path of said optical signature device.

In the context of the present invention, the term "signature" is used both for the process of modification applied to incident light and for denoting the structure that is obtained within the optical path of the inventive optical signature device as a result of the inventive method. I.e., the term "signature" in particular also denotes the structural changes within the optical path of the inventive optical signature device that are caused by the inventive signature generating means.

In contrast to the state of the art devices, which only provide for a single, fixed signature in that they comprise a given, unchangeable, Mach-Zehnder-structure, the inventive optical signature device provides for a flexible configurability which allows to determine the required signature or reflection pattern, respectively, directly at the customer's premises or anywhere else in the field instead of requiring industrial fabrication processes to provide a unique signature.

That is, instead of requiring a specific production process, which is specialized depending on the signature to be provided, the inventive optical signature device allows a simple on-the-fly configuration by determining the required signature only when it is really needed, i.e. directly before integrating the optical signature device into an optical communications network or the like. Once a required predetermined signature is chosen, it may easily be implemented by the inventive signature generating means which are also implemented within the inventive optical signature device.

As a further advantage, a network operator may keep a plurality of identical optical signature devices according to the present invention in his inventory, the devices not yet being configured to comprise a predetermined signature, which significantly simplifies inventory maintenance and costs in contrast to keeping track e.g. of a plurality of different Mach-Zehnder-devices.

A further solution to the object of the present invention is provided by an optical signature device according to claim 2. The optical signature device for providing an optically detectable signature to an optical path of an optical system, particularly an optical fiber of an optical communications network, is characterized by configuration means for selecting a predetermined signature which is to be provided by the optical signature device, and by signature generating means for generating said predetermined signature within said optical path of said optical system.

In contrast to the aforementioned variant of the present invention according to claim 1, the optical signature device according to claim 2 is not required to be coupled to the optical system during operation, i.e. periods during which incident light has to be signed, but rather enables to generate a corresponding signature within an optical path of the optical system itself which allows to remove the inventive optical signature device after the signature generating process. I.e., the inventive optical signature device according to claim 2 enables to apply a signature directly within an existing optical system such as an optical fiber or the like and may thus advantageously be used as a tool e.g. for service technicians allowing them to install the inventive signature functionality in existing networks or systems.

Both variants of the present invention guarantee for a precise generation of the optical signature within the respective optical paths since the process of generating the optical signature is controlled by the configuration means and the signature generating means and can therefore be executed substantially without human interaction that may represent a source of error.

The optical signature generated by the inventive optical signature device may be embodied by a specific reflection pattern, as already described, or by a specific transmission pattern. I.e., it is also possible to "sign" incident light during a transmission process; such a configuration may advantageously be employed within an optical link comprising a ring topology. A combination of signed reflected light and signed transmitted light is also possible, wherein specific reflection and transmission parameters may also be determined independently from each other, e.g. by providing a plurality of optical paths each of which only provides for reflection or transmission exclusively.

The signature may mathematically be described e.g. by a transmission function or - in analogy thereto - a reflection function, i.e. mathematical expressions relating the incident signals to the reflected/transmitted signals comparable to the well-known scattering parameters. Generally, the signature applied by the present invention imposes characteristic features or modifies characteristic features of incident radiation such as a temporal shape or the spectrum of the radiation in a unique way.

As a further example, the signature generated by the inventive device may e.g. generate a unique pulse sequence when interrogated from a central office by a single test pulse, which may e.g. be achieved by providing several, differently delayed reflections of the incident test pulse within the signature device or an optical path that has been modified by the signature device. Another example may comprise filtering an incident optical broadband signal in a characteristic way and reflecting or transmitting the filtered optical signal as the signed signal.

According to a very advantageous embodiment of the present invention, the signature generating means comprise mechanical coding means for altering the geometry of a portion of the optical path depending on the predetermined signature.

Once a predetermined signature, which is to be generated either within the optical path of the inventive signature device itself or within an optical path of an existing optical system, has been defined, the configuration means control the signature generating means to effect generation of the defined signature within the respective optical path.

A first possibility to generate the desired signature within the optical path such as an optical fiber or wave guide made of a polymer substrate comprises mechanically influencing the fiber or substrate in order to effect grooves or generally discontinuities which lead to the desired pattern of reflection or transmission.

For this purpose, the signature generating means may be equipped with a configurable crimp tool the geometry of which may be set depending on the signature to be effected. Upon selection of the desired signature, the inventive configuration means determine an appropriate mechanical configuration of the crimp tool, set this configuration, e.g. by means of appropriate actuators to drive respective movable or generally configurable parts of the crimp tool, and apply the tool to the optical path or a portion thereof, for example by compressing a portion of an optical fiber belonging to the optical path. Thereby, a predetermined pattern of grooves or the like can be imprinted to the optical fiber leading to perturbations of the refractive index of the fiber portion that can influence reflection and/or transmission properties in the sense of a signature. Particularly, geometric patterns imprinted via said crimp tool can form Bragg reflectors for a specific wavelength within the so modified fiber.

A further advantageous variant of the present invention proposes to modify the optical fiber by means of said crimp tool so as to enable a specific polarization of incident light. This variant particularly proposes to implement asymmetric perturbations of the optical fiber or its structure, respectively, which effect a certain predetermined polarization of incident light.

Apart from the step of selecting the signature to be applied - which may also be performed automatically, i.e. according to a predetermined algorithm -, the further steps of the aforementioned process are preferably carried out automatically in order to ensure maximum precision when manipulating the geometry of the optical path.

Besides applying grooves to an outer surface of the optical fiber, altering the geometry of said optical path in the sense of the present invention may also comprise to generate passages within the optical fiber having the function of a spatial light modulator.

Suitable actuators for changing the geometry of the crimp tool and/or for imprinting the grooves may e.g. comprise electromagnetic and/or piezoelectric actuators. The actuators as well as the configuration means and the signature generating means may be controlled by a microcontroller or some other kind of process control means. Preferably, the inventive signature generation device only requires to be supplied e.g. with electrical energy during the selection and signature generation process and may substantially be passive at other times.

A further advantageous possibility to provide the inventive highly configurable signature device comprises providing various different elements such as optical delay sections, spatial light modulators, gratings or other elements that exhibit different transmission parameters for incident light. Furthermore, a plurality of optical switches and/or couplers may be provided that enable to connect the aforementioned elements with an input and/or an output of said optical path and with each other in a variety of ways. This way, by controlling the optical switches and/or couplers, a wide variety of different transmission paths may be generated within the inventive optical signature device, which allows a flexible provisioning of signatures.

Micromechanical actuators may also be provided to control configurable elements of the inventive optical signature device.

According to yet another very advantageous variant of the present invention, said signature generating means comprise a light source capable of emitting a configurable pattern of light, preferably ultraviolet light, for influencing the optical properties of a portion of the optical path depending on the predetermed signature.

This embodiment of the present invention is particularly advantageous in combination with an optical path comprising polymer material as an optical wave guide, the optical properties of which may be altered by using ultraviolet light.

A further advantageous application of ultraviolet light for realising a signature within a polymer-based optical wave guide can be achieved in combination with a configurable spatial light modulator for providing the configurable pattern of light. An exposure time, which determines the total amount of ultraviolet radiation energy supplied to the wave guide, is another parameter that influences the creation of the signature.

According to a further advantageous embodiment of the present invention, said signature generating means are configured to, preferably permenantly, alter the optical reflection and/or transmission properties of the optical path depending on the predetermined signature.

Generally, any technique for permanently altering the optical reflection and/or transmission properties may be employed to assign the optical signature. In the case of the above described crimp tool, a permanent plastic deformation of the optical fiber may be desirable to achieve a lasting signature effect. Alternatively, once configured, the crimp tool may remain clamped around the optical fiber so as to maintain the desired alteration of the fiber's geometry. This variant moreover enables to change the signature - if required - by changing the geometry of the crimp tool via the actuators provided therein.

Another variant of the present invention provides to only temporarily influence the optical path to attain a certain signature.

A further very advantageous embodiment of the present invention is charaterized by an interface for receiving information related to the predetermined signature to be applied. The inventive interface may comprise a user interface which enables a user of the optical signature device such as a service technician to enter or select a signature to be applied to the respective optical path.

Apart from providing a user interface, interface means for establishing connectivity with a personal computer or the like may also be provided. In this case, a special software may be provided on the personal computer which assists the service technician in selecting the optical signature to be applied.

Another very advantageous embodiment of the present invention is charaterized in that the optical signature device is portable. The inventive optical signature device may e.g. be integrated into a portable tool that may be used by service technicians.

Alternatively, the inventive optical signature device may be configured as a stationary device which is preferably assigned to a further, existing network element.

It is also possible to directly integrate the inventive optical signature device into various types of optical network termination equipment or other optical network elements. This way, the so equipped optical network element offers the advantageous functionality of the inventive optical signature device. Furthermore, this embodiment of the present invention offers an increased security against manipulation. A further advantage of the integration of the inventive optical signature device with conventional network elements is the increased precision when integrating the inventive optical signature device into the existing device e.g. during a manufacturing process. It is to be noted that even such a configuration enables an on-the-fly configuration of the inventive signature device, e.g. via the user interface. I.e., even when combining the inventive optical signature device with a conventional device, the decisive advantage over conventional signature devices - namely the flexible configurability - is not lost.

A further solution to the object of the present invention is given by a method according to claim 12. Said method of operating an optical signature device for providing an optically detectable signature to an optical system is charaterized by the following steps:
- selecting a signature to be applied to an optical path of the optical signature device and/or an optical system, particularly an optical fiber of an optical communications network,
- controlling signature generating means for generating said predetermined signature within said optical path.

The step of generating said predetermined signature within said optical path may comprise the above mentioned processes of mechanically altering portions of the optical path and/or switching transmission elements provided therein by means of optical switches and/or couplers so as to obtain the required signature.

A further advantageous variant of the present invention comprises optically coupling the optical signature device to said optical system. This variant of the inventive method is advantageously used in combination with the optical signature device according to the present invention which comprises a configurable optical path to receive a predetermined optical signature. This type of optical signature device will most probably permanently remain coupled to the optical system thereby providing for the respective optical signature.

A further advantageous variant of the inventive method is charaterized by, preferably temporarily, providing the optical signature device with electrical energy to supply the configuration means and/or the signature generating means.

A further possibility to apply an optical signature to an optical path by using the inventive optical signature device is given by locally applying light, preferably ultraviolet light, to the optical path, and by transmitting a signature generating signal from an external source to said optical path in order to generate a predetermined signature within the optical path. According to this variant of the present invention, the inventive optical signature device is primarily used for preparing the optical path determined to receive the optical signature, i.e. by providing radiation energy to the optical fiber of the optical path in form of the ultraviolet light, whereas the signature generating signal which is provided for actually generating the optical signature is provided by an external source such as a corresponding device which may in the case of passive optical networks be located at a central office. Alternatively, thermal energy or any other form of energy suitable to prepare an alteration of the optical properties of the optical path via said signature generating signal may also be applied to the optical path in order to prepare it for actually generating the signature via the externally provided signature generating signal.

Summarizingly, the inventive optical signature device enables the flexible generation of optically detectable signatures by providing a kind of "raw" device which either comprises a dynamically configurable base material such as an optical path made of polymer material that can be modified by the inventive signature generating means at the time of installation of the inventive device. In this case, mechanical or radiation-based modifications of the optical path are used to customize the base material and the complete signature device.

Another solution alternatively or additionally proposes to provide several optical transmission elements such as optical delay lines and/or gratings and/or spatial light modulators and the like which dynamically may be switched together in a variety of different ways at least at the time of installation to provide unique transmission and/or reflection properties. In this case, not only modifications of an existing optical path are performed, but also completely new optical transmission paths may be formed within the inventive signature device to enable the generation of the desired signature.

Each variant has the particular advantage that a customization, i.e. the selection and generation of a specific signature, is possible directly prior to installing and/or using the inventive device. Prior to that step, the inventive devices are identical as far as their possible future use is concerned. I.e., an operator of an optical network employing the inventive devices is not overburdened by being required to maintain a large inventory comprising a plurality of different devices. He only needs to keep the inventive devices, i.e. only one type of device, in his inventory and he has to provide for a customization shortly before installation.

Further features, aspects and advantages of the present invention are presented in the following detailed description with reference to the drawings, in which:
- Figure 1: depicts a first embodiment of an optical signature device according to the present invention,
- Figure 2: depicts a second embodiment of the optical signature device according to the present invention, and
- Figure 3: depicts a simplified flow chart respresenting an embodiment of the inventive method.

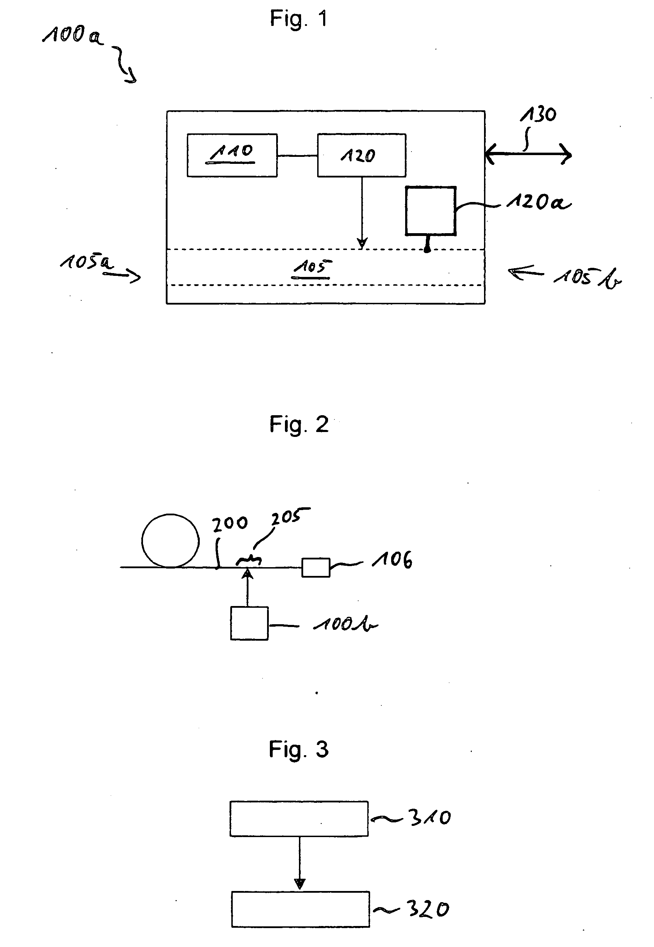

Figure 1 depicts a first embodiment of the optical signature device 100a according to the present invention. The optical signature device 100a comprises an optical path 105 that connects an optical input 105a of the optical signature device 100a with an optical output 105b of the optical signature device 100a.

This configuration enables to integrate the inventive optical signature device 100a into existing optical systems such as optical communication networks and the like. For instance, the optical signature device 100a may optically be coupled to a drop fiber of a passive optical network via its optical path 105.

The optical signature device 100a may be connected with its optical input 105a to an access fiber line of the PON leading to a central office, whereas an optical network termination device such as an optical transceiver located at a customer's premises may be connected to the optical output 105b of the optical signature device 100a.

Optical power received at the optical input 105a is transmitted via the optical path 105 to the optical output 105b of the optical signature device 100a. Conversely, optical power received at the optical output 105b may also be transmitted via the optical path 105 to the optical input 105a in order not to impede a bidirectional communication between the central office and the optical transceiver.

The optical signature device 100a according to the present invention furthermore comprises configuration means 110 for selecting a predetermined signature which is to be provided by the optical signature device 100a. The inventive configuration means 110 are operatively coupled to signature generating means 120 which are provided to generate said predetermined signature within the optical path 105 of the optical signature device 100a.

According to a first advantageous embodiment of the present invention, the signature generating means 120 comprise mechanical coding means which are capable of altering the geometry of the optical path 105 thus influencing the optical properties of the optical path 105 in order to effect discontinuities in the optical path 105 which lead to reflections of a predetermined pattern depending on the desired signature. That is, by using the inventive signature generating means 100a, a structure within the optical path 105 may be established so as to provide for a predetermined reflection pattern upon receiving incident optical power at the optical input 105a.

Said reflection pattern may be evaluated by a corresponding receiver which may e.g. be located at the central office of the passive optical network enabling the central office to identify the customer or the network location provided with the inventive optical signature device 100a depicted by Figure 1. Thus it is possible to check the integrity of specific drop fibers of the PON even in tree type network topologies.

For example, if there is a further optical signature means (not shown) leading to a second reflection upon receiving incident optical power from the central office in the course of the checking procedure, the reflection caused by this further optical signature means can be distinguished from the reflections caused by the optical signature means 100a, and the corresponding information may be discarded. By only regarding the reflections having a signature corresponding with the interesting drop line, the link integrity of this drop line may selectively be checked.

The mechanical coding means of the signature generating means 120 may e.g. comprise electromagnetic or piezoelectric actuators or the like in order to alter the geometry of the optical path 105. The mechanical coding means may be equipped with a configurable crimp tool (not shown) the geometry of which may be set depending on the signature to be effected within the optical path 105. Upon selection of the desired signature, the inventive configuration means 110 determine an appropriate mechanical configuration of the crimp tool, set this configuration, e.g. by means of appropriate actuators to drive respective configurable parts of the crimp tool, and apply the crimp tool to the optical path 105 or a portion thereof, for example by compressing a portion of an optical fiber belonging to the optical path 105. Thereby, a predetermined pattern of grooves can be imprinted to the optical fiber leading to perturbations of the refractive index of the fiber portion that can influence reflection and/or transmission properties in the sense of a signature. Particularly, geometric patterns imprinted via said crimp tool can form Bragg reflectors for a specific wavelength within the so modified optical fiber.

A further advantageous embodiment of the inventive optical signature device 100a comprises various different elements such as optical delay sections, spatial light modulators, gratings or other elements that exhibit different transmission parameters for incident light. Furthermore, a plurality of optical switches and/or couplers may be provided that enable to connect the aforementioned elements with the optical input 105a and/or the optical output 105b of said optical path 105 and with each other in a variety of ways. It is also possible to employ micromechanical mirrors or mirror arrays within the inventive optical signature device 100a to define and modify transmission paths realizing different transmission/reflection patterns. This way, by controlling the optical switches and/or couplers, a wide variety of different transmission paths may be generated within the inventive optical signature device 100a, which allows a flexible provisioning of signatures. The aforementioned transmission elements and couplers and switches are symbolized by the block 120a within Figure 1.

Micromechanical actuators may also be provided to control configurable elements of the inventive optical signature device 100a.

According to a further embodiment of the present invention, the signature generating means 120 may comprise a light source capable of emitting a configurable pattern of light, preferably ultraviolet light, which also enables to influence the optical properties of a portion of the optical path 105 so as to realise a predetermined signature within the optical path 105. For instance, the ultraviolet light can be used to change optical parameters of a polymer-based portion of the optical path 105.

A further very advantageous variant of the present invention comprises an interface for receiving information related to the predetermined signature to be applied. The interface is symbolized by the double arrow 130 depicted within Figure 1. Preferably, the interface 130 comprises a user interface which enables a user of the optical signature device 100a such as a service technician to enter or select a signature which is to be applied to the optical path 105 of the optical signature device 100a.

The interface 130 may also comprise a universal serial bus, USB, interface or another interface suitable to establish communication with a personal computer or the like.

A further variant 100b of the inventive optical signature device is depicted by Figure 2. In contrast to the first embodiment 100a of the inventive optical signature device described with reference to Figure 1, the second embodiment 100b of the present invention does not comprise an optical path such as the optical path 105 of the optical signature device 100a of Figure 1 of its own. The second embodiment 100b of the optical signature device rather solely comprises the inventive configuration means 110 and the signature generating means 120, which in contrast to the first embodiment are configured to effect an optical signature within an existing component of an optical network such as an optical fiber 200 of a communications network.

The optical fiber 200 depicted in Figure 2 is connected to an optical transceiver 106 located at a customer's premises.

The inventive optical signature device 100b may advantageously be configured to be portable and may be used by a service technician for applying an optical signature to existing optical network elements. Since the inventive optical signature device 100b is configured to apply a signature to another, external optical device 200, it is not required to remain coupled to the respective optical device 200 after generating the signature.

The optical signature device 100b is rather used once e.g. by a service technician to configure a desired optical signature within an optical fiber 200 of an existing optical system, and after this, the optical signature device 100b may be removed from said optical system and is ready to be used to apply a further optical signature to another optical system.

To ensure the creation of unique signatures each time the inventive optical signature device 100b is applied to an optical device 200, it may comprise a control unit (not shown) which is in communication with the user interface 130, the configuration means 110, and the signature generation means 120.

The control unit may also comprise a local memory unit comprising a database or access means such as a radio link for accessing a remote database comprising information on signatures that have already been used/applied and remaining, i.e. free signatures, which are available for being applied to optical elements in future.

Hence, by selecting a free signature, for instance via the interface 130 (Figure 1), a service technician may provide a previously unused optical signature which is different from all previously used optical signatures.

The application of the inventive signature device 100b thereby enables to efficiently provide optical systems such as polymer-based optical wave guides and the like with unique optical signatures.

By using the inventive embodiment 100a according to Figure 1, virtually any optical system may be equipped with a corresponding signature as long as said system allows for optically coupling the optical path 105 of the signature device 100a. As is obvious, the signature device 100a may also comprise a control unit for performing general control tasks as well as looking up free signatures or managing a user interface or the like.

Figure 3 depicts a simplified flow chart of a method according to the present invention. Within step 310, the unique signature to be applied to an optical path 105, 205 of the optical system 200 is selected, and after this, the signature generating means 120 (Figure 1, Figure 2) of the inventive optical signature device 100a, 100b are controlled so as to generate said predetermined signature within said optical path 105, 205, which is performed within step 320 of the present invention.

The selection of the signature to be applied by means of the inventive process will usually depend on a location and/or a customer or the like which is associated with the optical network element or fiber passage to be provided with the signature.

It is also possible to at least temporarily provide an optical transceiver to the optical path 105 of the signature device 100a, or in case of the signature device 100b, to the optical path 205 of the optical system, in order to establish a communications path from the location of the signature device 100a, 100b to a central office. By doing so, the signature to be applied as well as further process parameters for the signature providing process may conveniently be exchanged between the central office and the signature device 100a, 100b, or a portable service tool comprising the inventive signature device 100a, 100b, respectively. Instead of a direct optical communication between the central office and the signature device 100a, 100b, a radio link or any other suitable form of link enabling data communication may be employed.

A further technique to apply the optical signature to an optical path 105, 205 is given by locally applying light, preferably ultraviolet light, to the optical path 105, 205, and by transmitting a signature generating signal from an external source to said optical path 105, 205. The intensity of ultraviolet light imposed on the optical path 105, 205 is chosen to deliver enough radiation energy to enable the formation of a structural change effecting a characteristic reflection or transmission pattern by additionally providing said signature generating signal, which may e.g. originate from a corresponding light source located at the central office. According to this variant of the present invention, the inventive optical signature device 100a, 100b is primarily used for preparing the optical path 105, 205 determined to receive the optical signature, i.e. by providing the radiation energy to the optical fiber of the optical path 105, 205 in form of the ultraviolet light, whereas the information regarding the unique signature is comprised within the signature generating signal from the external source. It is particularly advantageous to apply the aforementioned technique to such optical paths 105, 205 which are sufficiently susceptible to the manipulation using ultraviolet light or other suitable electromagnetic radiation. Preferred embodiments provide using polymer-based optical fibers, wherein the internal structure of the polymer is modified by the imposed radiation energy as well as by the signature generating signal once a sufficient amount of radiation energy has been supplied to the polymer. Since with this technique the signature is provided from an external source via the signature generating signal, that may be received by more than one network element, e.g. in PONs comprising tree topology, only one particular network element may be processed at a time to prevent the creation of multiple identical signatures. Thermal energy or any other form of energy suitable for preparing the optical path 105, 205 for the signature generating signal may also be employed and may correspondingly be supplied by the inventive optical signature device 100a, 100b. In this case, e.g. a heating element (not shown) may be implemented additionally or alternatively to the UV light source.

Yet another advantageous variant of the present invention proposes to locally provide the ultraviolet radiation or other suitable radiation to the optical path, wherein said radiation is configured so as to impose a specific pattern to the optical path 105, 205 in order to create a signature. For instance, the inventive signature generating means 120 may comprise a spatial light modulator that shapes the ultraviolet light so as to effect a specific modification of the optical properties of the optical path 105, 205. For instance, the modulated ultraviolet light may cause spatial variations of the refractive index within the modified optical path which effect a specific reflection pattern.

Generally, applying a signature to the optical path 105, 205 is not limited to modifying the reflective properties of the optical path 105, 205. It is also possible to generate signatures that "sign" incident light during a transmission process, so that light transmitted through the modified optical path 105, 205 carries the respective signature. Such a configuration may advantageously be employed within an optical link comprising a ring topology. A combination of signed reflected light and signed transmitted light is also possible, wherein specific reflection and transmission parameters may also be determined independently from each other, e.g. by providing a plurality of optical paths each of which only provides for reflection or transmission exclusively.

A further advantageous variant of the present invention proposes to modify the optical fiber comprised within the optical path 105 by means of said crimp tool so as to enable a specific polarization of incident light. This variant particularly proposes to implement asymmetric perturbations of the optical fiber or its structure, respectively, which effect a certain predetermined polarization of incident light. Such polarization is also suitable for signing incident light, and the corresponding signature can e.g. be analyzed by applying polarizing filters to the signed light and by evaluating the so filtered radiation, particularly its power level.

The inventive signature device 100a may advantageously be used in a variety of different configurations such as transmission and/or reflection mode as already described above. Particularly, the transmission mode, wherein incident light is signed upon passing the signature device 100a, may be used for loop topologies that provide a circular connection of network elements, whereas reflection configurations are well suited for implementation within optical link termination equipment such as an optical network unit (ONU).

Generally, the inventive signature device 100a may also be coupled to an optical fiber of a PON or the like by means of an optical coupler which - in a reflection configuration - may also be used to couple a signed signal back to an optical main path.

## Claims

1. Optical signature device (100a) for providing an optically detectable signature to an optical system (200), particularly to an optical communications network (200), wherein said optical signature device (100a) comprises an optical path (105) that can be coupled with the optical system (200), said optical signature device comprising configuration means (110) for selecting a predetermined signature which is to be provided by the optical signature device (100a), and signature generating means (120) for generating said predetermined signature within said optical path (105) of said optical signature device (100a), **characterized in that** said signature generating means (120) comprise mechanical coding means for altering the geometry of and/or imposing a geometrical pattern on a portion of the optical path (105) depending on the predetermined signature, and by one or more actuators to drive the mechanical coding means, wherein said optical signature device (100a) is portable.

2. Optical signature device (100b) for providing an optically detectable signature to an optical path (205) of an optical system (200), particularly an optical fiber of an optical communications network (200), comprising configuration means (110) for selecting a predetermined signature which is to be provided by the optical signature device (100b), and signature generating means (120) for generating said predetermined signature within said optical path (205) of said optical system (200), **characterized in that** said signature generating means (120) comprise mechanical coding means for altering the geometry of and/or imposing a geometrical pattern on a portion of the optical path (205) depending on the predetermined signature, and by one or more actuators to drive the mechanical coding means, wherein said optical signature device (100b) is portable.

3. Optical signature device (100a) according to one of the preceding claims, **characterized by** a plurality of optical elements such as optical delay sections, spatial light modulators, gratings, and by a plurality of optical switches and/or couplers that are configured to connect said optical elements such as optical delay sections, spatial light modulators, gratings with an input (105a) and/or an output (105b) of said optical path (105) and/or with each other in a plurality of ways.

4. Optical signature device (100a, 100b) according to one of the preceding claims, **characterized in that** said signature generating means (120) comprise a light source capable of emitting a configurable pattern of light, preferably ultraviolet light, for influencing the optical properties of a portion of the optical path (105, 205) depending on the predetermined signature.

5. Optical signature device (100a, 100b) according to claim 4, **characterized by** a configurable spatial light modulator for providing the configurable pattern of light.

6. Optical signature device (100a, 100b) according to one of the preceding claims, **characterized in that** said signature generating means (120) are configured to, preferably permanently, alter the optical reflection and/or transmission properties of the optical path (105, 205) depending on the predetermined signature.

7. Optical signature device (100a, 100b) according to one of the preceding claims, **characterized by** an interface (130) for receiving information related to the predetermined signature to be applied, particularly a user interface enabling a user of the optical signature device (100a, 100b) to enter or select a signature to be applied.

8. Optical network element comprising an optical signature device (100a, 100b) according to one of the preceding claims

9. Method of operating an optical signature device (100a, 100b) for providing an optically detectable signature to an optical system (200), **characterized by** the following steps:
- selecting a signature to be applied to an optical path (105, 205) of the optical signature device (100a, 100b) and/or an optical system (200), particularly an optical fiber of an optical communications network (200),
- controlling signature generating means (120), which comprise mechanical coding means for altering the geometry of/or imposing a geometrical pattern on a portion of the optical path (105, 205) depending on the predetermined signature, in order to generate said predetermined signature within said optical path (105, 205).

10. Method according to claim 9, **characterized by** optically coupling said optical signature device (100a) to said optical system (200).

11. Method according to one of the claims 9 to 10, **characterized by**, preferably temporarily, providing the optical signature device (100a, 100b) with electrical energy to supply configuration means (110) and/or the signature generating means (120).

12. Method according to one of the claims 9 to 11, **characterized by** locally applying light, preferably ultraviolet light, to the optical path (105, 205), and by transmitting a signature generating signal from an external source to said optical path (105, 205) to generate said predetermined signature within the optical path (105, 205).

13. Method according to one of the claims 9 to 12, **characterized by** determining a required signature or reflection pattern, respectively, directly at a customer's premises.

14. Method according to one of the claims 9 to 13, **characterized by** using said mechanical coding means for altering the geometry of/or imposing a geometrical pattern on a portion of the optical path (105, 205) depending on the predetermined signature directly at a customer's premises.

## Patentansprüche

1. Optische Signaturvorrichtung (100a) zum Bereitstellen einer optisch erfassbaren Signatur an ein optisches System (200), insbesondere an ein optisches Kommunikationsnetzwerk (200), wobei die besagte optische Signaturvorrichtung (100a) einen optischen Pfad (105) umfasst, welcher mit dem optischen System (200) gekoppelt werden kann, wobei die besagte optische Signaturvorrichtung Konfigurationsmittel (110) zum Auswählen einer vorgegebenen Signatur, welche von der optischen Signaturvorrichtung (100a) bereitzustellen ist, und Signaturerzeugungsmittel (120) zum Erzeugen der besagten vorgegebenen Signatur innerhalb des besagten optischen Pfads (105) der besagten optischen Signaturvorrichtung (100a) umfasst, **dadurch gekennzeichnet, dass** die besagten Signaturerzeugungsmittel (120) mechanische Codiermittel zum Ändern der Geometrie eines Abschnitts des optischen Pfads (105) und/oder zum Anbringen eines geometrischen Musters darauf umfassen, je nach der vorgegebenen Signatur, und durch einen oder mehrere Aktuator(en) zum Ansteuern der mechanischen Cordiermittel, wobei die besagte optische Signaturvorrichtung (100a) portabel ist.

2. Optische Signaturvorrichtung (100b) zum Bereitstellen einer optisch erfassbaren Signatur an einen optischen Pfad (205) eines optischen Systems (200), insbesondere einer optischen Faser eines optischen Kommunikationsnetzwerks (200), mit Konfigurationsmitteln (110) zum Auswählen einer vorgegebenen Signatur, welche von der optischen Signaturvorrichtung (100b) bereitzustellen ist, und Signaturerzeugungsmitteln (120) zum Erzeugen der vorgegebenen Signatur innerhalb des besagten optischen Pfads (205) des besagten optischen Systems (200), **dadurch gekennzeichnet, dass** die besagten Signaturerzeugungsmittel (120) mechanische Codiermittel zum Ändern der Geometrie eines Abschnitts des optischen Pfads (205) und/oder zum Anbringen eines geometrischen Musters darauf umfassen, je nach der vorgegebenen Signatur, und durch einen oder mehrere Aktuator(en) zum Ansteuern der mechanischen Cordiermittel, wobei die besagte optische Signaturvorrichtung (100b) portabel ist.

3. Optische Signaturvorrichtung (100a) nach einem der vorstehenden Ansprüche, **gekennzeichnet durch** eine Mehrzahl von optischen Elementen wie beispielsweise optische Verzögerungsabschnitte, räumliche Lichtmodulatoren, Gitter, und **durch** eine Mehrzahl von optischen Schaltungen und/oder Kopplern, welche für das Verbinden der besagten optischen Elemente wie beispielsweise der optischen Verzögerungsabschnitte, räumlichen Lichtmodulatoren, Gitter mit einem Eingang (105a) und/oder einem Ausgang (105b) des besagten optischen Pfads (105) und/oder in vielfacher Weise miteinander konfiguriert sind.

4. Optische Signaturvorrichtung (100a, 100b) nach einem der vorstehenden Ansprüche, **dadurch gekennzeichnet, dass** die besagten Signaturerzeugungsmittel (120) eine Lichtquelle umfassen, welche fähig ist, ein konfigurierbares Lichtmuster, vorzugsweise Ultraviolettlicht, auszusenden, um die optischen Eigenschaften eines Abschnitts des optischen Pfads (105, 205) je nach der vorgegebenen Signatur zu beeinflussen.

5. Optische Signaturvorrichtung (100a, 200b) nach Anspruch 4, **gekennzeichnet durch** einen konfigurierbaren räumlichen Lichtmodulator zum Bereitstellen des konfigurierbaren Lichtmusters.

6. Optische Signaturvorrichtung (100a, 100b) nach einem der vorstehenden Ansprüche, **dadurch gekennzeichnet, dass** die besagten Signaturerzeugungsmittel (120) für die, vorzugsweise permanente, Änderung der optischen Reflexions- und/oder Übertragungseigenschaften des optischen Pfads (105, 205), je nach der vorgegebenen Signatur, konfiguriert sind.

7. Optische Signaturvorrichtung (100a, 100b) nach einem der vorstehenden Ansprüche, **gekennzeichnet durch** eine Schnittstelle (130) für den Empfang von Informationen in Bezug auf die anzuwendende vorgegebene Signatur, insbesondere eine Benutzerschnittstelle, welche es einem Benutzer der optischen Signaturvorrichtung (100a, 100b) ermöglicht, eine anzuwendende Signatur einzugeben oder auszuwählen.

8. Optisches Netzwerkelement umfassend eine optische Signaturvorrichtung (100a, 100b) gemäß einem der vorstehenden Ansprüche.

9. Verfahren zum Betreiben einer optischen Signaturvorrichtung (100a, 100b) zum Bereitstellen einer optisch erfassbaren Signatur an ein optisches System (200), **gekennzeichnet durch** die folgenden Schritte:
- Auswählen einer auf einen optischen Pfad (105, 205) der optischen Signaturvorrichtung (100a, 100b) und/oder ein optisches System (200), insbesondere eine optische Faser eines optischen Kommunikationsnetzwerks (200), anzuwendenden Signatur,
- Steuern der Signaturerzeugungsmittel (120), welche mechanische Codiermittel zum Ändern der Geometrie eines Abschnitts des optischen Pfads (105, 205) oder zum Anbringen eines geometrischen Musters auf diesen, je nach der vorgegebenen Signatur, umfassen, um die besagte vorgegebene Signatur innerhalb des besagten optischen Pfads (105, 205) zu erzeugen.

10. Verfahren nach Anspruch 9, **gekennzeichnet durch** das optische Koppeln der besagten optischen Signaturvorrichtung (100a) an das besagte optische System (200).

11. Verfahren nach einem der Ansprüche 9 bis 10, **gekennzeichnet durch** das, vorzugsweise temporäre, Versorgen der optischen Signaturvorrichtung (100a, 100b) mit elektrischer Energie, um Konfigurationsmittel (110) und/oder die Signaturerzeugungsmittel (120) bereitzustellen.

12. Verfahren nach einem der Ansprüche 9 bis 11, **gekennzeichnet durch** das lokale Applizieren von Licht, vorzugsweise von ultraviolettem Licht, auf den optischen Pfad (105, 205), und **durch** das Übertragen eines signaturerzeugenden Signals von einer externen Quelle an den besagten optischen Pfad (105, 205), um die besagte vorgegebene Signatur innerhalb des optischen Pfads (105, 205) zu erzeugen.

13. Verfahren nach einem der Ansprüche 9 bis 12, **gekennzeichnet durch** das jeweilige Ermitteln einer geforderten Signatur oder eines Reflexionsmuster, direkt am Standort eines Kunden.

14. Verfahren nach einem der Ansprüche 9 bis 13, **gekennzeichnet durch** das Verwenden der besagten mechanischen Codiermittel zum Ändern der Geometrie eines Abschnitts des optischen Pfads (105, 205) oder zum Anbringen eines geometrischen Musters darauf, je nach der vorgegebenen Signatur, direkt am Standort eines Kunden.

## Revendications

1. Dispositif de signature optique (100a) pour fournir une signature pouvant être détectée optiquement à un système optique (200), notamment à un réseau de communications optique (200), ledit dispositif de signature optique (100a) comprenant un trajet optique (105) qui peut être connecté avec le système optique (200), ledit dispositif de signature optique comprenant des moyens de configuration (110) pour sélectionner une signature prédéterminée qui doit être fournie par le dispositif de signature optique (100a) et des moyens de génération de signature (120) pour générer ladite signature prédéterminée au sein dudit trajet optique (105) dudit dispositif de signature optique (100a), **caractérisé en ce que** lesdits moyens de génération de signature (120) comprennent des moyens de codage mécaniques pour modifier la forme géométrique et/ou imposer un modèle géométrique sur une portion du trajet optique (105) en fonction de la signature prédéterminée et par un ou plusieurs actionneurs pour entraîner les moyens de codage mécaniques, ledit dispositif de signature optique (100a) étant portable.

2. Dispositif de signature optique (100b) pour fournir une signature pouvant être détectée optiquement à un trajet optique (205) d'un système optique (200), notamment une fibre optique d'un réseau de communications optique (200), comprenant des moyens de configuration (110) pour sélectionner une signature prédéterminée qui doit être fournie par le dispositif de signature optique (100b) et des moyens de génération de signature (120) pour générer ladite signature prédéterminée au sein dudit trajet optique (205) dudit système optique (200), **caractérisé en ce que** lesdits moyens de génération de signature (120) comprennent des moyens de codage mécaniques pour modifier la forme géométrique et/ou imposer un modèle géométrique sur une portion du trajet optique (205) en fonction de la signature prédéterminée et par un ou plusieurs actionneurs pour entraîner les moyens de codage mécaniques, ledit dispositif de signature optique (100b) étant portable.

3. Dispositif de signature optique (100a) selon l'une des revendications précédentes, **caractérisé par** une pluralité d'éléments optiques comme des sections de retard optiques, des modulateurs de lumière spatiaux, des réseaux de diffraction, et par une pluralité de commutateurs et/ou de coupleurs optiques qui sont configurés pour connecter lesdits éléments optiques tels que les sections de retard optiques, les modulateurs de lumière spatiaux, les réseaux de diffraction avec une entrée (105a) et/ou une sortie (105b) dudit trajet optique (105) et/ou les uns avec les autres d'une pluralité de manières.

4. Dispositif de signature optique (100a, 100b) selon l'une des revendications précédentes, **caractérisé en ce que** lesdits moyens de génération de signature (120) comprennent une source de lumière capable d'émettre un modèle de lumière configurable, de préférence de la lumière ultraviolette, pour influencer les propriétés optiques d'une portion du trajet optique (105, 205) en fonction de la signature prédéterminée.

5. Dispositif de signature optique (100a, 100b) selon la revendication 4, **caractérisé par** un modulateur de lumière spatial configurable pour fournir le modèle de lumière configurable.

6. Dispositif de signature optique (100a, 100b) selon l'une des revendications précédentes, **caractérisé en ce que** lesdits moyens de génération de signature (120) sont configurés, de préférence de manière permanente, pour modifier les propriétés de réflexion et/ou de transmission optique du trajet optique (105, 205) en fonction de la signature prédéterminée.

7. Dispositif de signature optique (100a, 100b) selon l'une des revendications précédentes, **caractérisé par** une interface (130) pour recevoir des informations en rapport avec la signature prédéterminée à appliquer, notamment une interface d'utilisateur qui permet à un utilisateur du dispositif de signature optique (100a, 100b) de saisir ou de sélectionner une signature à appliquer.

8. Élément de réseau optique comprenant un dispositif de signature optique (100a, 100b) selon l'une des revendications précédentes.

9. Procédé d'utilisation d'un dispositif de signature optique (100a, 100b) pour fournir une signature pouvant être détectée optiquement à un système optique (200), **caractérisé par** les étapes suivantes :
- sélection d'une signature à appliquer à un trajet optique (105, 205) du dispositif de signature optique (100a, 100b) et/ou à un système optique (200), notamment une fibre optique d'un réseau de communication optique (200),
- commande de moyens de génération de signature (120), lesquels comprennent des moyens de codage mécaniques pour modifier la forme géométrique et/ou imposer un modèle géométrique sur une portion du trajet optique (105, 205) en fonction de la signature prédéterminée afin de générer ladite signature prédéterminée au sein dudit trajet optique (105, 205).

10. Procédé selon la revendication 9, **caractérisé par** le couplage optique dudit dispositif de signature optique (100a) audit système optique (200).

11. Procédé selon l'une des revendications 9 à 10, **caractérisé par** la fourniture de préférence temporaire d'énergie électrique au dispositif de signature optique (100a, 100b) afin d'alimenter les moyens de configuration (110) et/ou les moyens de génération de signature (120).

12. Procédé selon l'une des revendications 9 à 11, **caractérisé par** l'application locale de lumière, de préférence de lumière ultraviolette, au trajet optique (105, 205), et par la transmission d'un signal de génération de signature depuis une source externe audit trajet optique (105, 205) afin de générer ladite signature prédéterminée au sein du trajet optique (105, 205).

13. Procédé selon l'une des revendications 9 à 12, **caractérisé par** la détermination respectivement d'une signature requise ou d'un modèle de réflexion directement dans les locaux d'un client.

14. Procédé selon l'une des revendications 9 à 13, **caractérisé par** l'utilisation desdits moyens de codage mécaniques pour modifier la forme géométrique et/ou imposer un modèle géométrique sur une portion du trajet optique (105, 205) en fonction de la signature prédéterminée directement dans les locaux d'un client.
